# EUROPÄISCHE PATENTSCHRIFT

(11) **EP 0 451 569 B1**
(45) Veröffentlichungstag und Bekanntmachung des Hinweises auf die Patenterteilung: **22.06.1994**
(21) Anmeldenummer: 91104415.4
(22) Anmeldetag: 21.03.1991
(51) Int. Cl.: B60Q 1/04

(54) **Beleuchtungseinrichtung für Fahrzeuge**
Lighting device for vehicle
Dispositif d'éclairage pour véhicule

(30) Priorität: 11.04.1990 DE 4011703
(43) Veröffentlichungstag der Anmeldung: 16.10.1991
(73) Patentinhaber: Hella KG Hueck & Co., 59552 Lippstadt (DE)
(72) Erfinder: Goldschmidt, Karol, W-4780 Lippstadt (DE); Rethschulte, Dieter, W-4540 Lengerich (DE)

(56) Entgegenhaltungen:
- DE-A- 3 402 274
- FR-A- 2 488 556

## Beschreibung

Die Erfindung bezieht sich auf eine Beleuchtungseinrichtung für Fahrzeuge mit den Merkmalen nach dem Oberbegriff des Anspruchs 1.

Eine solche Beleuchtungseinrichtung ist aus der DE-A-3 044 313 bekannt. Hierbei handelt es sich bei dem ersten Teil um eine aus Reflektor und Lichtscheibe bestehende optische Einheit und bei dem zweiten Teil um eine die optische Einheit aufnehmende Mulde eines starr mit der Fahrzeugkarosserie verbundenen Karosserieteils. Die Lagerstelle der optischen Einheit besteht aus einer in eine Seitenwandung der Mulde eingebrachten öffnung, und der in die öffnung eingreifende Vorsprung ist an die Außenseite des Reflektors angeformt. Auf der der Lagerstelle gegenüberliegenden Seitenwandung der Mulde ist eine weitere öffnung eingebracht, in welcher ein an der Rückseite des Reflektors befestigtes federndes Element lösbar verrastet ist. Das federnde Element liegt außerdem an der Innenseite der Seitenwandung der Mulde an und drückt somit die optische Einheit gegen die Lagerstelle. Außerdem ist die optische Einheit in der Mulde durch ein zwischen sie und der Bodenfläche der Mulde eingesetztes federndes Element gehalten, welches das in die öffnung eingreifende federnde Element gegen die Innenseite der öffnung drückt. Bei einer solchen federnden Haltevorrichtung der optischen Einheit ist diese nicht schwingungsfrei in der Mulde gehalten. Hierbei können die Schwingungen so groß werden, daß die rastende Verbindung zwischen ihr und dem sie tragenden Karosserieteil sich löst. Außerdem ist nach einer Montage und Demontage der optischen Einheit nicht sicher, daß die optische Einheit und somit ihre Lichtquelle wieder genau die gleiche Position einnimmt. Letzteres ist besonders bei Scheinwerfern für Kraftfahrzeuge wichtig, da diese sonst wieder eingestellt werden müssen, und weiterhin ist für Scheinwerfer auch eine schwingungsfreie Befestigung sehr wichtig, damit der Gegenverkehr nicht geblendet wird.

Aufgabe der Erfindung ist es, die im Gattungsbegriff beschriebene Beleuchtungseinrichtung derart zu verbessern, daß nach einem oder öfteren Lösen und Befestigen des ersten Teils die Lichtquelle zu dem zweiten Teil immer wieder genau positioniert ist und dabei das erste Teil möglichst schwingungssicher mit dem zweiten Teil verbindbar ist und trotzdem sowohl seine Montage als auch Demontage leicht und schnell durchgeführt werden kann. Diese Aufgabe wird erfindungsgemäß durch die Merkmale des Kennzeichnungsteils des Anspruchs 1 gelöst. Bei einer solchen Lösung ist das erste Teil nach seinem Schwenken zum zweiten Teil hin zwischen dem Schwenklager und einer Anlagefläche des zweiten Teils klemmend eingespannt. Aus dieser Fixierung löst sich das erste Teil, wenn es nach dem Lösen der verrastbaren Verbindung vom zweiten Teil weggeschwenkt wird.

Vorteilhafte Weiterbildungen der Erfindung sind in den Unteransprüchen 2 bis 28 beschrieben. Mit Anspruch 2 kommt beim Schwenken des ersten Teils zum zweiten Teil hin die Anlagefläche auch dann zur Anlage, wenn am Schwenklager das erste Teil nicht korrekt am zweiten Teil geführt wird. Mit Anspruch 3 und 4 ist eine besonders vorteilhafte Größe und Lage der Anlageflächen gegeben. Darüber hinaus ist außerdem wegen des großen Abstands der Anlageflächen zur Schwenkachse die Verbindung zwischen dem ersten Teil und dem zweiten Teil auch dann sehr fest, wenn der Toleranzbereich für die Lage der Anlageflächen nicht so eng gewählt ist. Ferner ist hierbei das erste Teil um einen sehr großen Schwenkwinkel leicht und ruckfrei verschwenkbar, da die Anlageflächen sich nur in einem sehr kleinen Schwenkwinkel überlappen.

Bei einer Beleuchtungseinrichtung, bei welcher das erste Teil von einem Reflektor und einer an dem Reflektor befestigten Lichtscheibe gebildet ist, und bei welcher das zweite Teil von einem in einen Karosserieeinschnitt eingesetzten oder damit integrierten Rahmen gebildet ist, ergibt sich nach Anspruch 5 eine sehr einfache und kostengünstig herstellbare Lösung. Diese Lösung ist besonders dann zweckmäßig, wenn der Rahmen zumindest um eine Achse verstellbar an der Fahrzeugkarosserie gelagert ist und es sich bei der Beleuchtungseinheit um einen abgeblendeten Scheinwerfer handelt. Mit Anspruch 6 ist der Reflektor sowohl parallel zur Schwenkachse gesehen am Schwenklager klapperfrei gehalten als auch leicht und ruckfrei verschwenkbar. In den Ansprüchen 7 bis 9 sind die Anlageflächen von einteilig mit dem Reflektor bzw. dem Rahmen hergestellten Verdickungen gebildet, zu deren Entformung keine verstellbaren Werkzeugteile notwendig sind. Mit dem Anspruch 10 ist der Reflektor quer zu seiner Schwenkrichtung gesehen im Bereich der einen großen Abstand zur Schwenkachse aufweisenden Anlageflächen klapperfrei in dem Rahmen gehalten und trotzdem leicht aus dem Rahmen herausschwenkbar. Mit Anspruch 11 und 12 ist der Reflektor besonders fest zwischen dem Schwenklager und den Anlageflächen des Rahmens gehalten. Mit Anspruch 13 ist um die Anlageflächen zur überlappung zu bringen, der Reflektor nur mit geringem Kraftaufwand zu verschwenken, da die nach außen gewölbte Anlagefläche linienförmig an der ihr benachbarten Anlagefläche anliegt. Mit Anspruch 14 erhält man in einfacher Art und Weise für den zum Rahmen hin verschwenkbaren Abschnitt des Reflektors einen Anschlag. Mit dem Anspruch 15 ist ein leichtes und schnelles Einfädeln der Lagerzapfen in die Lagerschalen möglich.

Bei der vorteilhaften Weiterbildung der Beleuchtungseinheit nach den Ansprüchen 16 bis 20 hält der Betätigungshebel durch das Eingreifen seiner Rastnase in eine Hinterschneidung des Reflektors den Reflektor gegen ein mögliches Herausschwenken aus dem Rahmen fest. Hierbei kann durch Verschwenken des Betätigungshebels an der Handhabe der Reflektor leicht und schnell aus seiner rastenden Verbindung gelöst werden. Ein solcher Betätigungshebel kann auch, wenn seitlich des Scheinwerfers in der Karosserie eine öffnung vorhanden ist, mit einem stabförmigen Werkzeug von der Vorderseite des Scheinwerfers her verschwenkt werden. Mit den Ansprüchen 21 bis 27 wird beim Schwenken des Betätigungshebels der um die Schwenkachse schwenkbare Abschnitt des Reflektors aus dem Rahmen herausgedrückt. Dies ist besonders dann vorteilhaft, wenn zwischen der Beleuchtungseinheit und der sie umgebenden Karosseriewandung ein enger Spalt besteht. Mit Anspruch 28 ist eine Weiterbildung der Erfindung angegeben, bei welcher durch die die Lichtscheibe umgebende Dichtung der Reflektor besonders fest mit der Fahrzeugkarosserie verbunden ist.

In der Zeichnung ist ein Ausführungsbeispiel der Erfindung dargestellt, und zwar zeigt

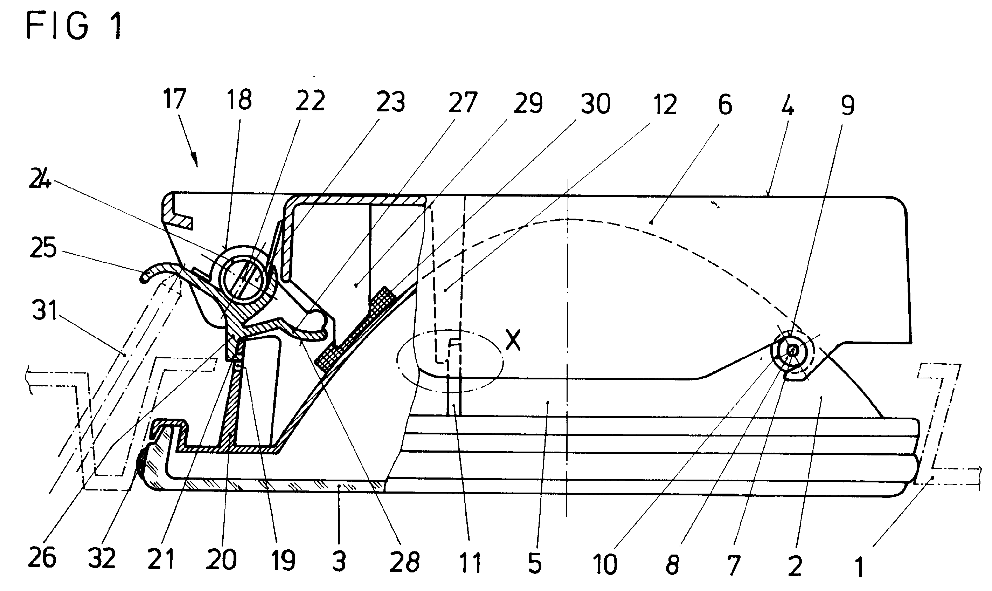

Figur 1 eine Draufsicht auf eine Beleuchtungseinheit, welche aus einem starr mit dem Fahrzeug verbundenen Rahmen und einer in den Rahmen eingesetzten optischen Einheit besteht und

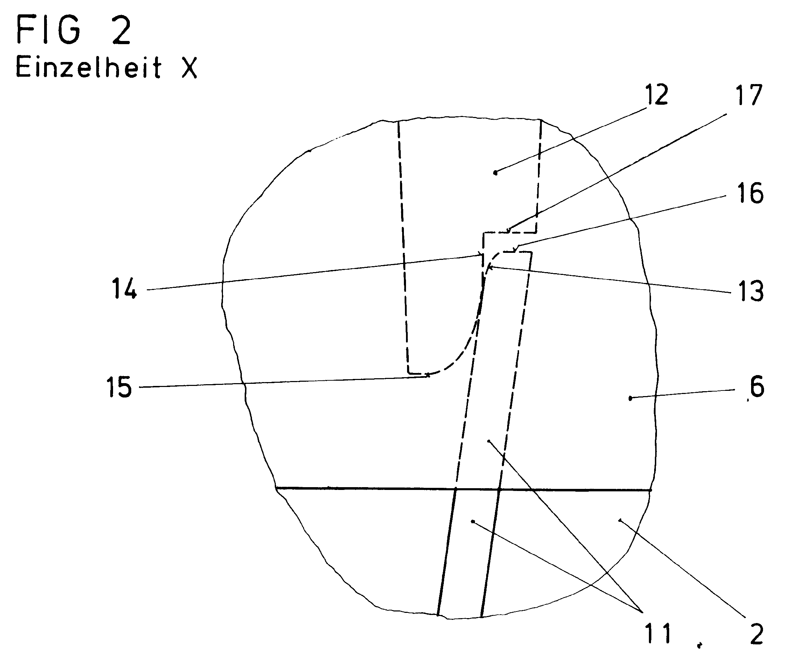

Figur 2 die Einzelheit X der Figur 1.

Die Beleuchtungseinheit ist ein abgeblendeter Scheinwerfer für Kraftfahrzeuge und ist in die öffnung einer Karosseriewandung (1) eingesetzt. Die Beleuchtungseinheit besteht aus einem ersten Teil, welches sich aus einem aus Kunststoff hergestellten schalenförmigen Reflektor mit einer in seiner öffnung eingesetzten Glühlampe (nicht dargestellt) und der im Reflektor (2) befestigten Lichtscheibe (3) zusammensetzt und aus einem zweiten Teil, welches der aus Kunststoff hergestellte Rahmen (4) ist, an welchem der Reflektor mit der Lichtscheibe lösbar befestigt ist und welcher mit der Karosseriewandung (1) um eine horizontale Achse verstellbar gelagert verbunden ist (nicht dargestellt). Der Reflektor (2) weist durch die obere und untere Abflachung (5) eine rechteckige Lichtaustrittsöffnung auf und ist mit seiner Rückseite voraus in den Rahmen (4) eingesetzt, dessen sich gegenüberliegende Seitenwandungen (6) etwa parallel und in einem kleinen Abstand zu den Abflachungen (5) des Reflektors (2) verlaufen. In der Nähe einer der kurzen Seiten des rechteckigen Reflektors ist der Reflektor um eine parallel zur kurzen Seite verlaufende Schwenkachse (7) verstellbar an dem Rahmen (6) gelagert. Die Schwenkachse ist gebildet durch jeweils einen an die beiden Abflachungen (5) angeformten Vorsprung (8), welcher der Lagerzapfen ist, der in eine als Lagerschale dienende Lagerstelle (9) der Seitenwandungen (6) eingreift. Die Lagerschalen (9) sind in den zum Reflektor hin gerichteten Randbereich der Seitenwandung (6) eingebracht und etwa zur Mitte der Lichtscheibe (3) hin geöffnet. Der Lagerzapfen (8) weist durch eine Verdickung zum Reflektor hin die Schulter (10) auf, mit welcher er an der Innenseite der Seitenwandungen (6) anliegt.

An dem um die Schwenkachse (7) aus dem Rahmen (4) herausschwenkbaren Abschnitt des Reflektors (2) und der Lichtscheibe (3) ist an die Abflachungen (5) des Reflektors (2) jeweils eine etwa in Schwenkrichtung verlaufende rippenartige Verdickung (11) angeformt. Die rippenartige Verdickung (11) ragt mit ihrem zur Rückseite des Scheinwerfers weisenden Endabschnitt in den Rahmen (4) hinein und überlappt sich mit ihrem Endabschnitt mit dem freien Endabschnitt, der an die Innenseite der Seitenwandungen (6) angeformten rippenartigen Verdickung (12). Hierbei liegt die rippenartige Verdickung (11) mit ihrer Anlagefläche (13) an der der Schwenkachse (7) zugewandten Anlagefläche (14) der rippenartigen Verdickung (12) an. Parallel zur Schwenkachse (7) gesehen, verläuft die Anlagefläche (14) in einem konvexen Bogen und die Anlagefläche (13) gradlinig. Deshalb liegen die Anlageflächen (13 und 14) linienförmig aneinander. Der Bogen der Anlagefläche (14) verläuft bis zum freien Ende der rippenartigen Verdickung (12) aus und bildet somit am freien Ende der Verdickung (12) die Auflaufschräge (15) für die rippenartige Verdickung (11). Die rippenartige Verdickung (11) weist die Auflaufschräge (16) auf, welche beim Einschwenken des Reflektors an der Auflaufschräge (15) entlanggleitet und dabei den Reflektor (2) mit seinem Zapfen (8) in die Lagerschale (9) drückt. Damit ein solches festes Einspannen des Reflektors zwischen der Lagerschale (9) und der Anlagefläche (14) des Rahmens (6) möglich ist, weist die Anlagefläche (13) des Reflektors einen etwas größeren Abstand zur Schwenkachse (7) auf als die Anlagefläche (14) des Rahmens (4). Die rippenartige Verdickung (12) weist an ihrem freien Ende durch ihren verjüngten Endabschnitt eine Stufe auf, deren Stoßfläche (17) als Anschlag bzw. als überdrückungsschutz für den Reflektor (2) dient. In dieser Lage ist der Reflektor durch die lösbare Verbindung (17) gehalten, welche von dem an dem Rahmen (4) schwenkbar gelagerten Betätigungshebel (18) und der in die Wandung (20) des Reflektors eingebrachten Hinterschneidung gebildet wird, in welche die Rastnase (21) des Betätigungshebels eingreift. Die Schwenkachse (22) des Betätigungshebels (18) verläuft etwa parallel zu dem ihr benachbarten kurzen Randbereich des rechteckförmigen Reflektors (2) und wird gebildet durch einen an einen Wandungsabschnitt des Rahmens (4) angeformten Zapfen (23). Auf den Lagerzapfen ist die Spiralfeder (24) aufgesetzt, welche mit einem freien Ende an einem Wandungsabschnitt des Rahmens (4) und mit dem anderen Endabschnitt an dem ersten Arm (25) des Betätigungshebels anliegt. Der zweite Arm (26) des Betätigungshebels ist auf die Lichtscheibe (3) zu gerichtet und weist an seinem freien Ende die Rastnase (21) auf, welche zum Reflektor (2) hin gerichtet ist und in eine die Hinterschneidung (19) bildende öffnung der Wandung (20) eingreift. Der dritte Arm (27) des Betätigungshebels verläuft etwa quer zur Einsetzrichtung des Reflektors (2) und ist auf diesen zu gerichtet. Der dritte Arm (27) weist auf der dem Reflektor (2) zugewandten Seite die Gleitfläche (28) auf, mit welcher er beim Schwenken des ersten Arms (25) an der Stirnfläche der Wandung (20) entlanggleitet und den um die Schwenkachse (7) schwenkbaren Abschnitt des Reflektors (2) und der Lichtscheibe (3) aus dem Rahmen (4) bzw. der öffnung der Karosseriewandung (1) herausdrückt. Ein Herausdrücken des Reflektors (2) aus der öffnung der Karosseriewandung (1) ist bei dieser Ausführungsform zwingend notwendig, da an den umlaufenden Randbereich der Lichtscheibe (3) die Dichtung (32) angeklebt ist, welche unter Vorspannung an der Innenseite der öffnung der Karosseriewandung (1) anliegt. Nach dem Herausschwenken des Reflektors kann dieser mit seinen Lagerzapfen (8) aus den offenen Lagerschalen (9) des Rahmens (4) herausgezogen werden, um z. B. einen Glühlampenwechsel vorzunehmen. Damit beim Hereinschwenken des Reflektors der Betätigungshebel selbstrastend in die Hinterschneidung (19) des Reflektors eingreifen kann, ist der Betätigungshebel durch seine federnde Anlage an der Stirnfläche der Wandung (29) des Rahmens (4) genau gehalten, und sein zweiter Arm (26) wird durch den Druck der Wandung (20) auf die Rastnase (21) nach außen gedrückt, bis die Rastnase (21) in die Hinterschneidung selbstrastend eingreift. An der Hinterschneidung (19) liegt die Rastnase (21) unter Vorspannung an, weil das an die Rückseite des Reflektors angeklebte, gummiartige, federnde Element (30) gegen die Stirnfläche der Wandung (29) des Rahmens (4) drückt. Wenn von der Rückseite des Scheinwerfers der Betätigungshebel nicht erreichbar ist, kann dieser auch mit einem stabförmigen Werkzeug (31) von der Vorderseite des Fahrzeugs gelöst werden. Hierbei ist es jedoch notwendig, daß die Karosseriewandung eine entsprechende öffnung aufweist.

## Patentansprüche

1. Beleuchtungseinrichtung für Fahrzeuge, bestehend aus einem eine Lichtquelle aufweisenden ersten Teil und einem das erste Teil tragenden zweiten Teil mit folgenden Merkmalen:
- das erste Teil (2, 3) ist schwenkbar an dem zweiten Teil (4) gelagert und sein von dem zweiten Teil wegschwenkbarer Abschnitt ist mit dem zweiten Teil lösbar verrastet,
- das Schwenklager besteht aus einer nach einer Seite hin sich öffnenden Lagerstelle (9) und einem Vorsprung (8), welcher beim Verbinden des ersten Teils (2, 3) mit dem zweiten Teil (4) in die Lagerstelle (9) von ihrer offenen Seite her eingeführt ist,
dadurch gekennzeichnet, daß
- das erste und das zweite Teil (2, 3 und 4) starr mit ihnen verbundene Anlageflächen (13 und 14) aufweisen, welche so zueinander ausgerichtet sind, daß sie nach dem Schwenken des ersten Teils (2, 3) zu dem zweiten Teil (4) hin unter Vorspannung aneinanderliegen und dabei das Schwenklager (9, 8) ihr Gegenlager ist.

2. Beleuchtungseinrichtung nach Anspruch 1, dadurch gekennzeichnet, daß mindestens eine der zueinander korrespondierenden Anlageflächen (13, 14) derart abgeschrägt oder abgerundet ist, daß die Anlageflächen (13, 14) sich beim Schwenken des ersten Teils (2, 3) zu dem zweiten Teil (4) hin überlappen und erst bei fortschreitender überlappung zur Anlage miteinander kommen.

3. Beleuchtungseinrichtung nach Anspruch 2, dadurch gekennzeichnet, daß die zueinander korrespondierenden wirksamen Anlageflächen (13, 14) ein sehr kleiner Bruchteil der Mantelfläche eines Zylinders sind, von denen die Längsachse die Schwenkachse ist.

4. Beleuchtungseinrichtung nach einem der Ansprüche 1 bis 3, dadurch gekennzeichnet, daß der Abstand der Anlageflächen (13, 14) zu dem Schwenklager hin ein Vielfaches der quer zur Schwenkachse (7) bestehenden äußeren Abmessung des Schwenklagers ist.

5. Beleuchtungseinrichtung nach einem der Ansprüche 1 bis 4, dadurch gekennzeichnet, daß bei einem ersten Teil, welches von einem Reflektor (2) und einer an dem Reflektor (2) befestigten Lichtscheibe (3) gebildet ist, und bei einem zweiten Teil, welches von einem in einen Karosserieausschnitt eingesetzten oder damit integrierten Rahmen (4) gebildet ist, zwei gegenüberliegende Seitenwandungen (6) des Rahmens (4) jeweils eine als Lagerstelle dienende Lagerschale (9) aufweisen, welche zur Vorderseite des Reflektors (2) hin geöffnet ist und als Vorsprung jeweils an den den Lagerschalen (9) benachbarten äußeren Seiten des Reflektors (2) angebundene Lagerzapfen (8) dienen.

6. Beleuchtungseinrichtung nach Anspruch 5, dadurch gekennzeichnet, daß die Lagerzapfen (8) an ihrer Mantelfläche umlaufend eine nach außen gerichtete Schulter (10) aufweisen, mit welcher sie an der ihnen benachbarten Innenseite der Seitenwandungen (6) des Rahmens (4) anliegen.

7. Beleuchtungseinrichtung nach einem der vorstehenden Ansprüche 1 bis 6, dadurch gekennzeichnet, daß die zueinander korrespondierenden Anlageflächen (13 und 14) von einer Verdickung (12) an der Innenseite der Seitenwandungen (6) des Rahmens (4) und von einer Verdickung an der Außenseite (5) des Reflektors (2) gebildet sind.

8. Beleuchtungseinrichtung nach Anspruch 7, dadurch gekennzeichnet, daß die Verdickungen (11 und 12) rippenartig ausgeführt sind und etwa in Einsetzrichtung des Reflektors (2) verlaufen.

9. Beleuchtungseinrichtung nach Anspruch 8, dadurch gekennzeichnet, daß die rippenartigen Verdickungen (11 und 12) an ihren aufeinanderzu gerichteten Endabschnitten die Anlageflächen (13 bzw. 14) aufweisen.

10. Beleuchtungseinrichtung nach einem der Ansprüche 7 bis 9, dadurch gekennzeichnet, daß an den beiden Innenseiten der Seitenwandungen (6) des Rahmens (4) und/oder den diesen benachbarten Außenseiten (5) des Reflektors (2) eine Verdickung (11 bzw. 12) mit einer schmalen Seitenfläche anliegt.

11. Beleuchtungseinrichtung nach einem der Ansprüche 1 bis 10, dadurch gekennzeichnet, daß die wirksame Anlagefläche (13) des Reflektors (2) einen größeren Abstand zur Schwenkachse (7) aufweist als die wirksame Anlagefläche (14) des Rahmens (4).

12. Beleuchtungseinrichtung nach einem der Ansprüche 1 bis 11, dadurch gekennzeichnet, daß die Anlageflächen (13 und 14) parallel zur Schwenkachse (7) gesehen so zueinander ausgerichtet sind, daß sie nach dem Schwenken des Reflektors (2) zum Rahmen (4) hin durch eine durch sie entstehende Keilwirkung der Druck auf das Schwenklager immer größer ist, je weiter der Reflektor (2) zum Rahmen hin geschwenkt ist.

13. Beleuchtungseinrichtung nach einem der Ansprüche 1 bis 12, dadurch gekennzeichnet, daß eine Anlagefläche (14) parallel zur Schwenkachse (7) gesehen nach außen gewölbt verläuft und die andere Anlagefläche (13) eine Gerade ist, an welcher die Wölbung linienförmig anliegt.

14. Beleuchtungseinrichtung nach einem der Ansprüche 8 bis 13, dadurch gekennzeichnet, daß eine der beiden zueinander korrespondierenden rippenartigen Verdickungen (12) durch einen verjüngten Endabschnitt eine Stufe aufweist, deren Stoßfläche (16) als Anschlag für die ihr benachbarte rippenartige Verdickung (11) dient.

15. Beleuchtungseinrichtung nach einem der vorstehenden Ansprüche, dadurch gekennzeichnet, daß parallel zur Schwenkachse (7) des Reflektors (2) gesehen die offene Seite der Lagerschale (9) zwischen den Schenkeln eines spitzen Winkels liegt, welcher nach vorne und zur Mitte der Beleuchtungseinheit hin geöffnet ist.

16. Beleuchtungseinrichtung nach einem der vorstehenden Ansprüche 1 bis 15, dadurch gekennzeichnet, daß die selbstrastende Verbindung (17) zwischen dem Reflektor (2) und dem Rahmen (4) sich zusammensetzt aus einem an dem Rahmen (4) schwenkbar fixierten Betätigungshebel (18), welcher einen in Lichtaustrittsrichtung weisenden ersten Arm (25) mit einer auf den Reflektor (2) zu gerichteten Rastnase (21) aufweist, und einer Hinterschneidung (19) des Reflektors (2), in welche die Rastnase (21) eingreift.

17. Beleuchtungseinrichtung nach Anspruch 16, dadurch gekennzeichnet, daß der Betätigungshebel (18) einen zweiten Arm (26) aufweist, welcher quer zum ersten Arm (25) verläuft und nach außen hin gerichtet ist.

18. Beleuchtungseinrichtung nach Anspruch 17, dadurch gekennzeichnet, daß der nach außen gerichtete Endabschnitt des zweiten Arms (25) als Handhabe dient, durch die die selbstrastende Verbindung (17) zwischen Reflektor (2) und Rahmen (4) von der Vorderseite der Beleuchtungseinheit her lösbar ist.

19. Beleuchtungseinrichtung nach einem der Ansprüche 16 bis 18, dadurch gekennzeichnet, daß die Achse des Betätigungshebels (18) zu dem ihr benachbarten vorderen Randbereich des Reflektors (2) etwa parallel verläuft.

20. Beleuchtungseinrichtung nach einem der Ansprüche 16 bis 19, dadurch gekennzeichnet, daß der Betätigungshebel (18) auf einem an dem Rahmen (4) angeformten Zapfen (23) drehbar gelagert ist, auf welchem eine Spiralfeder (24) aufgesetzt ist, welche durch ihre freien, radial nach außen gerichteten Endabschnitte, von denen einer an dem Rahmen (4) und der andere an dem Betätigungshebel (18) anliegt, den zweiten Arm (26) zum Reflektor hin drückt.

21. Beleuchtungseinrichtung nach einem der Ansprüche 16 bis 20, dadurch gekennzeichnet, daß der Betätigungshebel (18) einen dritten Arm (27) aufweist, welcher zusammen mit dem ersten und zweiten Arm (25 und 26) in einer Ebene verläuft und zum Reflektor (2) hin gerichtet ist.

22. Beleuchtungseinrichtung nach Anspruch 21, dadurch gekennzeichnet, daß die zum Reflektor (2) hin gerichtete Fläche (28) des dritten Arms (27) beim Verschwenken des Betätigungshebels (18) an einer Fläche der Rückseite des Reflektors (2) entlanggleitet und dabei den Reflektor (2) um seine Schwenkachse (7) aus dem Rahmen (4) herausschwenkt.

23. Beleuchtungseinrichtung nach Anspruch 21 oder 22, dadurch gekennzeichnet, daß der dritte Arm (27) gegen die Stirnfläche eines an die Rückseite des Reflektors (2) angeformten Ansatzes (20) drückt.

24. Beleuchtungseinrichtung nach Anspruch 23, dadurch gekennzeichnet, daß in den Ansatz (20) eine öffnung eingebracht ist, welche die Hinterschneidung (19) für die Rastnase (21) bildet.

25. Beleuchtungseinrichtung nach einem der vorstehenden Ansprüche, dadurch gekennzeichnet, daß bei aus seiner Rastverbindung gelöstem Reflektor (2) der dritte Arm (27) mit seiner der Gleitfläche (28) abgewandten Seite an der Stirnfläche einer an den Rahmen (4) angeformten Wandung (29) anliegt.

26. Beleuchtungseinrichtung nach einem der vorstehenden Ansprüche, dadurch gekennzeichnet, daß zwischen dem Reflektor (2) und dem Rahmen (4) ein federndes Element (30) eingesetzt ist, welches den Reflektor (2) mit seiner Hinterschneidung (19) gegen die Rastnase (21) drückt.

27. Beleuchtungseinrichtung nach Anspruch 26, dadurch gekennzeichnet, daß das federnde Element (30) aus einem gummiartigen Material besteht und am Rahmen (4) oder dem Reflektor (2) befestigt ist.

28. Beleuchtungseinrichtung nach einem der vorstehenden Ansprüche 1 bis 27, dadurch gekennzeichnet, daß an dem vorderen umlaufenden seitlichen Randbereich des Reflektors (2) oder der Lichtscheibe (3) umlaufend eine Dichtung (32) befestigt ist, welche an der Innenseite der öffnung einer die Beleuchtungseinheit aufnehmenden Karosseriewandung unter Vorspannung anlegbar ist.

## Claims

1. Lighting device for vehicles, comprising a first part which incorporates a light source and a second part which carries the first part, having the following features:
- the first part (2, 3) is swivel-mounted on the second part (4) and its portion adapted to be swivelled away from the second part is latched to the second part in releasable manner,
- the swivel bearing consists of a bearing point (9) opening towards one side and of a projection (8) which is introduced into the bearing point (9) from the open side thereof when joining the first part (2, 3) to the second part (4),
characterised in that
- the first part and the second part (2, 3 and 4) incorporate contact surfaces (13 and 14) rigidly joined to them, which surfaces are orientated with respect to one another so that after the first part (2, 3) has been swivelled towards the second part (4) they bear pretensioned against one another and the swivel bearing (9, 8) is also their steady bracket.

2. Lighting device according to claim 1, characterised in that at least one of the mutually corresponding contact surfaces (13, 14) is bevelled or rounded off in such a manner that the contact surfaces (13, 14) overlap when the first part (2, 3) is swivelled towards the second part (4) and only with progressive overlapping do they come to bear against one another.

3. Lighting device according to claim 2, characterised in that the mutually corresponding effective contact surfaces (13, 14) are a very small fraction of the circumferential surface of a cylinder, the longitudinal axis of which contact surfaces is the swivel axis.

4. Lighting device according to any of claims 1 to 3, characterised in that the spacing of the contact surfaces (13, 14) to the swivel bearing is a multiple of the existing external dimension of the swivel bearing transverse to the swivel axis (7).

5. Lighting device according to any of claims 1 to 4, characterised in that in the case of a first part constituted by a reflector (2) and a lens plate (3) attached to the reflector (2), and in the case of a second part constituted by a frame (4) inserted into a cutout in the vehicle body or integrated therewith, two opposing side walls (6) of the frame (4) each incorporate a bearing bush (9) to act as the bearing point, said bush opening towards the front face of the reflector (2), and the projection is formed by respective bearing journals (8) attached to the external faces of the reflector (2) which adjoin the bearing bushes (9).

6. Lighting device according to claim 5, characterised in that around their circumferential surface the bearing journals (8) have an outwardly directed shoulder (10) by which they bear against the adjoining inside face of the side walls (6) of the frame (4).

7. Lighting device according to any of the preceding claims 1 to 6, characterised in that the mutually corresponding contact surfaces (13 and 14) are constituted by a thickened portion (12) on the inside of the side walls (6) of the frame (4) and by a thickened portion on the outside (5) of the reflector (2).

8. Lighting device according to claim 7, characterised in that the thickened portions (11 and 12) are rib-shaped constructions and extend more or less in the direction in which the reflector (2) is inserted.

9. Lighting device according to claim 8, characterised in that the rib-shaped thickened portions (11 and 12) incorporate the contact surfaces (13 and 14 respectively) on their facing end portions.

10. Lighting device according to any of claims 7 to 9, characterised in that a thickened portion (11 or 12) bears with one narrow lateral face against the two inside faces of the side walls (6) of the frame (4) and/or the adjoining outside faces (5) of the reflector (2).

11. Lighting device according to any of claims 1 to 10, characterised in that the effective contact surface (13) of the reflector (2) is spaced further from the swivel axis (7) than the effective contact surface (14) of the frame (4).

12. Lighting device according to any of claims 1 to 11, characterised in that, viewed parallel to the swivel axis (7), the contact surfaces (13 and 14) are so orientated with respect to one another that after the reflector (2) has been swivelled towards the frame (4), a wedge effect produced by them means that the pressure on the swivel bearing increases the further the reflector (2) is swivelled towards the frame.

13. Lighting device according to any of claims 1 to 12, characterised in that, viewed parallel to the swivel axis (7), one contact surface (14) is cambered outwards and the other contact surface (13) is a straight line against which the camber rests linearly.

14. Lighting device according to any of claims 8 to 13, characterised in that its tapered end portion means that one of the two mutually corresponding rib-shaped thickened portions (12) incorporates a step whose impact surface (16) acts as a stop for the rib-shaped thickened portion (11) adjoining it.

15. Lighting device according to any of the preceding claims, characterised in that, viewed parallel to the swivel axis (7) of the reflector (2), the open side of the bearing bush (9) is situated between the sides of an acute angle which opens towards the front and to the centre of the lighting unit.

16. Lighting device according to any of the preceding claims 1 to 15, characterised in that the self-latching connection (17) between the reflector (2) and the frame (4) is composed firstly of an operating lever (18) fixed so as to swivel on the frame (4), said lever incorporating a first arm (25) pointing in the direction in which the light escapes and having a locking lug (21) directed at the reflector (2), and secondly of an undercut (19) on the reflector (2), into which the locking lug (21) engages.

17. Lighting device according to claim 16, characterised in that the operating lever (18) incorporates a second arm (26) which extends transversely to the first arm (25) and is directed outwards.

18. Lighting device according to claim 17, characterised in that the outwardly directed end section of the second arm (25) serves as a handle by means of which the self-latching connection (17) between the reflector (2) and the frame (4) can be released from the front of the lighting unit.

19. Lighting device according to any of claims 16 to 18, characterised in that the axis of the operating lever (18) runs more or less parallel to the front rim area of the reflector (2) adjoining said axis.

20. Lighting device according to any of claims 16 to 19, characterised in that the operating lever (18) is mounted for rotation on a journal (23) moulded on the frame (4), there being placed on said journal (23) a flat spiral spring (24) which by its free, radially outward-directed end sections, one of which bears against the frame (4) and the other against the operating lever (18), presses the second arm (20) towards the reflector.

21. Lighting device according to any of claims 16 to 20, characterised in that the operating lever (18) has a third arm (27) which extends in one plane together with the first arm and the second arm (25 and 26) and is directed towards the reflector (2).

22. Lighting device according to claim 21, characterised in that as the operating lever (18) is being swivelled, the surface (28) of the third arm (27), which surface is directed towards the reflector (2), slides along a surface on the reverse of the reflector (2) and swivels the reflector (2) about its swivel axis (7) out of the frame (4).

23. Lighting device according to claim 21 or 22, characterised in that the third arm (27) presses against the end surface of a shoulder (20) moulded onto the reverse of the reflector (20).

24. Lighting device according to claim 23, characterised in that an opening is made in the shoulder (20) and said opening forms the undercut (19) for the locking lug (21).

25. Lighting device according to any of the preceding claims, characterised in that when the reflector (2) is released from its latching connection, the third arm (27) bears with its side remote from the slideway (28) against the end surface of a wall (29) moulded onto the frame (4).

26. Lighting device according to any of the preceding claims, characterised in that between the reflector (2) and the frame (4) is inserted an elastic element (30) which presses the reflector (2) with its undercut (19) against the locking lug (21).

27. Lighting device according to claim 26, characterised in that the elastic element (30) consists of a rubbery material and is fixed to the frame (4) or to the reflector (2).

28. Lighting device according to any of the preceding claims 1 to 27, characterised in that fixed around the front lateral rim area of the reflector (2) or of the lens plate (3) is a seal (32) which can be applied with prestress to the inside of the opening of a vehicle body wall receiving the lighting unit.

## Revendications

1. Dispositif d'éclairage pour véhicules, composé d'une première partie présentant une source lumineuse et d'une seconde partie portant la première partie, avec les caractéristiques suivantes:
- la première partie (2, 3) est montée à pivotement sur la seconde partie (4) et son tronçon qui peut être pivoté en éloignement de la seconde partie est encliqueté avec la seconde partie de manière libérable,
- le palier de pivotement est composé d'un lieu de montage (9) s'ouvrant vers un côté et d'une saillie (8) qui est introduite dans le lieu de montage (9) depuis son côté ouvert lors de la liaison entre la première partie (2, 3) et la seconde partie (4),
caractérisé en ce que
- la première et la seconde parties (2, 3 et 4) présentent des surfaces d'appui (13 et 14) solidaires de celles-ci, orientées l'une vers l'autre de telle manière qu'après pivotement de la première partie (2, 3) vers la seconde partie (4), elles reposent l'une contre l'autre sous précontrainte et en ce que le palier de pivotement (8, 9) constitue ici leur butée.

2. Dispositif d'éclairage selon la revendication 1, caractérisé en ce qu'au moins une des surfaces d'appui (13, 14) correspondant l'une à l'autre est chanfreinée ou arrondie de telle sorte que les surfaces d'appui (13, 14) se chevauchent lors du pivotement de la première partie (2, 3) vers la seconde partie (4) et qu'elles ne viennent en contact l'une avec l'autre que lorsque le chevauchement progresse.

3. Dispositif d'éclairage selon la revendication 2, caractérisé en ce que les surfaces d'appui (13, 14) actives correspondant l'une à l'autre sont une toute petite fraction de la surface enveloppe d'un cylindre dont l'axe longitudinal est l'axe de pivotement.

4. Dispositif d'éclairage selon l'une des revendications 1 à 3, caractérisé en ce que la distance entre les surfaces d'appui (13, 14) et le palier de pivotement est un multiple de la dimension extérieure du palier de pivotement existant transversalement à l'axe de pivotement (7).

5. Dispositif d'éclairage selon l'une des revendications 1 à 4, caractérisé en ce que lorsqu'une première partie est formée par un réflecteur (2) et un disque d'éclairement (3) fixé sur le réflecteur (2) et une seconde partie est formée par un cadre (4) monté dans une découpe de la carrosserie et donc intégré, deux parois latérales (6) opposées du cadre (4) présentent chacune un coussinet de palier (9) formant lieu de montage, qui est ouvert vers la face antérieure du réflecteur (2) et en ce que des tourillons (8) reliés à chacune des faces extérieures du réflecteur (2) qui sont voisines des coussinets de palier (9) servent de saillie.

6. Dispositif d'éclairage selon la revendication 5, caractérisé en ce que les tourillons (8) présentent sur la périphérie de leur surface enveloppe un épaulement (10) orienté vers l'extérieur avec lequel ils sont en contact sur la face interne des parois latérales (6) du cadre (4) qui leur est voisine.

7. Dispositif d'éclairage selon l'une des revendications 1 à 6, caractérisé en ce que les surfaces d'appui (13 et 14) correspondant l'une à l'autre sont formées par un renflement (12) sur la face intérieure des parois latérales (6) du cadre (4) et par un renflement sur la face extérieure (5) du réflecteur (2).

8. Dispositif d'éclairage selon la revendication 7, caractérisé en ce que les renflements (11 et 12) sont réalisés sous forme de nervures et s'étendent approximativement dans la direction de mise en place du réflecteur (2).

9. Dispositif d'éclairage selon la revendication 8, caractérisé en ce que les renflements (11 et 12) en forme de nervures présentent les surfaces d'appui (13 et 14) à leurs extrémités orientées l'une vers l'autre.

10. Dispositif d'éclairage selon l'une des revendications 7 à 9, caractérisé en ce qu'un renflement (11 et 12) est en contact par une surface latérale étroite sur les deux faces intérieures des parois latérales (6) du cadre (4) et/ou sur les faces extérieures (5) du réflecteur (2) qui sont voisines de celles-ci.

11. Dispositif d'éclairage selon l'une des revendications 1 à 10, caractérisé en ce que la surface d'appui (13) active du réflecteur (2) présente un plus grand écartement par rapport à l'axe de pivotement (7) que la surface d'appui (14) active du cadre (4).

12. Dispositif d'éclairage selon l'une des revendications 1 à 11, caractérisé en ce que les surfaces d'appui (13 et 14), vues parallèlement à l'axe de pivotement (7), sont orientées l'une vers l'autre de telle manière qu'après avoir fait pivoter le réflecteur (2) vers le cadre (4), par l'effet de coin qu'elles exercent, la pression sur le palier de pivotement est d'autant plus forte que le réflecteur (2) est pivoté en rapprochement du cadre.

13. Dispositif d'éclairage selon l'une des revendications 1 à 12, caractérisé en ce qu'une surface d'appui (14), vue parallèlement à l'axe de pivotement (7) s'étend en forme cintrée vers l'extérieur et en ce que l'autre surface d'appui (13) est une droite sur laquelle l'arc vient en contact linéaire.

14. Dispositif d'éclairage selon l'une des revendications 8 à 13, caractérisé en ce qu'un des deux renflements (12) en forme de nervures correspondant l'un à l'autre présente grâce à une extrémité rétrécie un gradin dont la face de jointure sert de butée au renflement (11) en forme de nervure qui lui est voisin.

15. Dispositif d'éclairage selon l'une des revendications précédentes, caractérisé en ce que vu parallèlement à l'axe de pivotement (7) du réflecteur (2), le côté ouvert du coussinet de palier (9) est situé entre les côtés d'un angle aigu qui est ouvert vers l'avant et vers le milieu de l'unité d'éclairage.

16. Dispositif d'éclairage selon l'une des revendications précédentes 1 à 15, caractérisé en ce que la liaison par auto-encliquetage (17) entre le réflecteur (2) et le cadre (4) est composée par un levier d'actionnement (18) fixé à pivotement sur le cadre (4), levier qui présente un premier bras (25) orienté en direction d'émergence de la lumière avec un tenon d'encliquetage (21) orienté vers le réflecteur (2) et par une contre-dépouille (19) du réflecteur (2) dans laquelle vient s'engager le tenon d'encliquetage (21).

17. Dispositif d'éclairage selon la revendication 16, caractérisé en ce que le levier d'actionnement (18) présente un second bras (26) qui s'étend transversalement au premier bras (25) et est dirigé vers l'extérieur.

18. Dispositif d'éclairage selon la revendication 17, caractérisé en ce que l'extrémité du premier bras (25) sert de manette par laquelle la liaison d'auto-encliquetage (17) entre le réflecteur (2) et le cadre (4) peut être libérée depuis la face antérieure de l'unité d'éclairage.

19. Dispositif d'éclairage selon l'une des revendications 16 à 18, caractérisé en ce que l'axe du levier d'actionnement (18) est à peu près parallèle à la zone de bordure antérieure du réflecteur (2) qui lui est voisine.

20. Dispositif d'éclairage selon l'une des revendications 16 à 19, caractérisé en ce que le levier d'actionnement (18) est monté en rotation sur un tourillon (23) formé sur le cadre (4), sur lequel est placé un ressort spiral (24) qui pousse le second bras (26) vers le réflecteur grâce à ses extrémités libres dirigées radialement vers l'extérieur, dont l'une est en appui sur le cadre (4) et l'autre sur le levier d'actionnement (18).

21. Dispositif d'éclairage selon l'une des revendications 16 à 20, caractérisé en ce que le levier d'actionnement (18) présente un troisième bras (27) qui s'étend dans un plan conjointement avec le premier et le second bras (25 et 26) et est orienté vers le réflecteur (2).

22. Dispositif d'éclairage selon la revendication 21, caractérisé en ce que la surface (28) du troisième bras (27) orientée vers le réflecteur (2) coulisse le long d'une surface de la face postérieure du réflecteur (2) lorsque le levier d'actionnement (18) est pivoté et bascule ici le réflecteur (2) autour de son axe de pivotement (7) pour le faire sortir du cadre (4).

23. Dispositif d'éclairage selon la revendication 21 ou 22, caractérisé en ce que le troisième bras (27) appuie contre la face frontale d'un épaulement (20) formée sur la face postérieure du réflecteur (2).

24. Dispositif d'éclairage selon la revendication 23, caractérisé en ce qu'une ouverture est ménagée dans l'épaulement, ouverture qui forme la contre-dépouille (19) pour le tenon d'encliquetage (21).

25. Dispositif d'éclairage selon l'une des revendications précédentes, caractérisé en ce que le réflecteur (2) une fois libéré de sa liaison par encliquetage, le troisième bras (27) prend appui par sa face opposée à la surface de coulissement (28) sur la face frontale d'une paroi (29) formée sur le cadre (2).

26. Dispositif d'éclairage selon l'une des revendications précédentes, caractérisé en ce qu'entre le réflecteur (2) et le cadre (4) est placé un élément (30) élastique qui appuie le réflecteur (2) avec sa contre-dépouille (19) contre le tenon d'encliquetage (21).

27. Dispositif d'éclairage selon la revendication 26, caractérisé en ce que l'élément élastique (30) est constitué par un matériau de caoutchouc et fixé sur le cadre (4) ou sur le réflecteur (2).

28. Dispositif d'éclairage selon l'une des revendications précédentes 1 à 27, caractérisé en ce qu'un joint (32) est fixé sur la périphérie de la zone de bordure latérale circonférentielle antérieure du réflecteur (2) ou du disque d'éclairement (3), et peut être mis en place sous précontrainte sur la face intérieure de l'ouverture d'une paroi de carrosserie recevant l'unité d'éclairage.
